# EUROPÄISCHE PATENTANMELDUNG

(11) **EP 3 199 398 A1**
(43) Veröffentlichungstag der Anmeldung: **02.08.2017**
(21) Anmeldenummer: 17150681.9
(22) Anmeldetag: 09.01.2017
(51) Int. Cl.: B60L 11/18, H02J 7/00

(54) **LASTSTEUERUNG EINER LADESTATION FÜR EIN ELEKTROFAHRZEUG**

(30) Priorität: 26.01.2016 DE 102016201113
(71) Anmelder: Bender GmbH & Co. KG, 35305 Grünberg (DE)
(72) Erfinder: MÖLL, Winfried, 35321 Laubach (DE); MEHLING, Frank, 63691 Ranstadt (DE)
(74) Vertreter: advotec.

(57) **Zusammenfassung**

Die Erfindung betrifft ein Verfahren zur Steuerung einer an einer Ladestation für ein Elektrofahrzeug bereitgestellten elektrischen Leistung, wobei die Ladestation von einer Anlage zur Erzeugung regenerativer Energie gespeist wird, die derart nahe an der Ladestation installiert ist, dass ein am Ort der Anlage wirkender und die erzeugte Leistung der Anlage bestimmender physikalisch-meteorologischer Parameterwert näherungsweise gleich dem Wert des Parameters am Ort der Ladestation ist. Es erfolgen eine Messung des physikalisch-meteorologischer Parameters am Ort der Ladestation und eine Steuerung der von der Ladestation bereitgestellten elektrischen Leistung durch Änderung eines Ladestroms in Abhängigkeit des gemessenen physikalisch-meteorologischen Parameters.

Weiterhin betrifft die Erfindung eine Ladestation für ein Elektrofahrzeug, die das vorgenannte Verfahren zur Steuerung der bereitgestellten elektrischen Leistung ausführt.

## Beschreibung

Die Erfindung betrifft ein Verfahren zur Steuerung einer an einer Ladestation für ein Elektrofahrzeug bereitgestellten elektrischen Leistung, wobei die Ladestation von einer Anlage zur Erzeugung regenerativer Energie gespeist wird, die derart nahe an der Ladestation installiert ist, dass ein am Ort der Anlage wirkender und die erzeugte Leistung der Anlage bestimmender physikalisch-meteorologischer Parameterwert näherungsweise gleich dem Wert des Parameters am Ort der Ladestation ist.

Der Begriff Steuerung sei hier in einem übergeordneten Sinn gebraucht, der eine Regelung miteinbezieht.

Weiterhin betrifft die Erfindung eine Ladestation für ein Elektrofahrzeug, die das vorgenannte Verfahren zur Steuerung der bereitgestellten elektrischen Leistung ausführt.

Bekanntermaßen werden elektrische Energiespeicher eines Elektrofahrzeugs regelmäßig an einer Ladestation aufgeladen. Die Ladestation kann sich dabei im häuslichen Bereich befinden oder es kann sich um öffentlich oder halböffentlich zugängliche Ladestationen handeln. Die öffentlichen/halböffentlichen Ladestationen sind üblicherweise mit einem Laderegler ausgestattet, der in Verbindung mit einem fahrzeugeigenen Bordladegerät einen Ladestrom entsprechend einer von einer Ladenetzinfrastruktur fest vorgegebenen maximalen Leistung und einer von den elektrischen Energiespeichern aufnehmbaren Leistung regelt.

Mit zunehmendem Aufkommen von Elektrofahrzeugen tritt nun der Fall auf, dass eine stets wechselnde Anzahl von Energiespeichern gleichzeitig zur Aufladung an Ladestationen angeschlossen ist. Dies wiederum führt zu einem schwankenden und schwer vorhersagbarem Lastprofil mit hohen Lastspitzen in dem versorgenden Stromnetz. Insbesondere in Verbindung mit Anlagen zur Erzeugung regenerativen Energien besteht in Phasen einer hohen Stromnachfrage die Gefahr eines Stromengpasses, wohingegen bei geringer Nachfrage und hohem Stromangebot eine Netzüberlastung eintreten kann, da die eingespeiste Leistung die nachgefragte Leistung übersteigt. In letzterem Fall können einspeiseseitig im Rahmen eines Einspeisemanagements die Anlagen zur Erzeugung regenerativen Energien durch den Anlagenbetreiber abgeregelt werden.

Lastseitig hingegen sind aus dem Stand der Technik bislang keine wirtschaftlich vertretbaren Maßnahmen bekannt, wie die Stabilität des Ladenetzes im Sinne eines planbaren und planmäßigen sicheren Betriebs gewährleistet sowie die Qualität des Ladenetzes im Sinne der Versorgungssicherheit mit hoher Zuverlässigkeit aufrechterhalten werden kann. Zwar ist es technisch möglich und in zukünftigen Elektrofahrzeugen bei gesteuertem Gleichstrom-Laden auch vorgesehen, dass über ein Web-Interface aus der Ferne eine Reduktion des Ladestroms vorgenommen werden kann, jedoch setzt diese Art der Laststeuerung eine kommunikative Vernetzung der Ladestationen voraus. Eine derartige Vernetzung mit dem Ziel eines übergeordneten Lastmanagements für Ladestationen erscheint aber recht aufwändig und ist wegen der aktuell noch relativ niedrigen entnommenen Gesamt(-Lade-)Leistung bislang nicht realisiert worden.

Im Zuge der Hinwendung zu regenerativen Energien erfolgt die Stromerzeugung zunehmend durch dezentrale, regionale Sonnenenergie- oder Windenergie-Anlagen, wobei der erzeugte Strom in unmittelbarer Nähe der erzeugenden Anlage auch "verbraucht" wird.

Die Erzeugungsleistung ist bei diesen Anlagen in hohem Maße abhängig von den am Ort der Anlage vorherrschenden physikalisch-meteorologischen Bedingungen, wie beispielsweise von der Sonneneinstrahlung bei Fotovoltaikanlagen oder von der Windgeschwindigkeit bei Windkraftanlagen. Die vorliegende Erfindung geht nun in einer regionalen Betrachtung davon aus, dass eine derartige Anlage so nahe an einer Ladestation - am Verbraucher - installiert ist, dass sowohl am Ort der Anlage, als auch am Ort der Ladestation ein die erzeugte Leistung der Anlage bestimmender physikalisch-meteorologischer Parameter zumindest näherungsweise den gleichen Wert besitzt. Dies ist beispielsweise für die Lichtstrahlung zutreffend, die am Ort der Ladestation einfällt und die gleichzeitig auf eine in regionaler Nähe wenige Kilometer davon entfernt installierte Fotovoltaikanlage trifft.

Der vorliegenden Erfindung liegt somit die Aufgabe zu Grunde, unter der genannten Voraussetzung eines näherungsweise gleichen physikalisch-meteorologischer Parameterwertes, die von der Ladestation bereitgestellte elektrische Leistung so zu steuern, dass die Stabilität und Qualität der Ladenetzinfrastruktur mit hoher Zuverlässigkeit sichergestellt werden kann.

Diese Aufgabe wird bezogen auf ein Verfahren in Verbindung mit den Merkmalen des Oberbegriffs des Anspruchs 1 dadurch gelöst, dass eine Messung des physikalisch-meteorologischer Parameters am Ort der Ladestation und eine Steuerung der von der Ladestation bereitgestellten elektrischen Leistung durch Änderung eines Ladestroms in Abhängigkeit des gemessenen physikalisch-meteorologischen Parameters erfolgen.

Der Grundgedanke der vorliegenden Erfindung beruht in vorteilhafter Weise darauf, die von der Ladestation bereitgestellte elektrische Leistung an die durch die Anlage zur Erzeugung regenerativer Energie erzeugte Leistung anzupassen, um durch dieses lokale Lastmanagement einen Stromengpass oder eine Überlastung der Ladenetzinfrastruktur zu vermeiden.

Dazu wird am Ort der Ladestation ein die erzeugte Leistung der Anlage bestimmender physikalisch-meteorologischer Parameter gemessen. Wegen der räumlichen Nähe von Ladestation und der Anlage zur Erzeugung regenerativer Energie kann davon ausgegangen werden, dass der am Ort der Ladestation gemessene Parameterwert auch am Ort der leistungserzeugenden Anlage vorherrscht und damit als Maß für die von dieser Anlage erzeugte Leistung herangezogen werden kann.

Als weiterer Schritt erfolgt eine Steuerung der von der Ladestation bereitgestellten elektrischen Leistung durch Änderung des Ladestroms in Abhängigkeit des gemessenen physikalisch-meteorologischen Parameters. Indem also beispielsweise bei einer durch den Parameterwert angezeigten sinkenden Erzeugungsleistung der einspeisenden Anlage der maximal mögliche Ladestrom in der Ladestation zurückgefahren wird, werden Lastspitzen vermieden. Andererseits kann bei einer hohen eingespeisten Leistung der maximal mögliche Ladestrom erhöht werden, um einer lokalen Netzüberlastung durch eine "zu viel eingespeiste Strommenge" entgegenzuwirken. Verbrauch und Erzeugung der Leistung werden somit durch diese parameterabhängige lokale Laststeuerung im Gleichgewicht gehalten, um die Netzstabilität und damit einen planbaren sicheren Betrieb zu gewährleisten.

Die Berücksichtigung der sich bei regenerativen Energien durch wetterbedingte Fluktuationen zeitlich stark ändernden Angebotssituation kann dazu genutzt werden, um in Abhängigkeit der erzeugten Leistung variable Stromtarife anzubieten und infolge der dadurch veränderten Nachfrage unter Vermeidung von Lastspitzen ein ausgeglichenes Lastprofil und damit eine hohe Netzqualität mit hoher Versorgungssicherheit zu erreichen.

In vorteilhafter Weise wird in dem Fall, dass die Anlage zur Erzeugung regenerativer Energie eine Fotovoltaikanlage ist, als physikalisch-meteorologischer Parameter eine am Ort der Ladestation einfallende Lichtstrahlung gemessen.

Da die von der Fotovoltaikanlage erzeugte Leistung stark von der aufgenommenen Lichtstrahlung abhängt, eignet sich diese in idealer Weise als Messparameter, um in dessen Abhängigkeit den Ladestrom an die Erzeugungsleistung anzupassen.

In weiterer Ausgestaltung des Verfahrens wird die Messung der einfallenden Lichtstrahlung zur Beurteilung der Funktionsfähigkeit einer in unmittelbarer Nähe der Ladestation befindlichen Straßenbeleuchtung herangezogen.

Als zusätzlicher Nutzen kann daher die Messung der Lichtstrahlung zur Funktionsprüfung und zur Funktionsüberwachung einer im Erfassungsbereich eines Lichtsensors der Ladestation befindlichen Straßenbeleuchtung dienen. Dies erscheint auch deswegen sinnvoll, da oftmals Ladestationen und Straßenbeleuchtungspunkte (Straßenlaternen) wegen der gemeinsamen Versorgungsleitungen in unmittelbarer Nachbarschaft zueinander installiert sind. In Verbindung mit einer Informationsübermittlung über die Stärke der empfangenen Lichtstrahlung von der Ladestation zu einer zentralen Betriebsstelle kann so auf die visuelle Kontrolle durch "Abfahren" der Beleuchtungspunkte verzichtet werden.

Bevorzugt wird in dem Fall, dass die Anlage zur Erzeugung regenerativer Energie eine Windkraftanlage ist, als physikalisch-meteorologischer Parameter eine am Ort der Ladestation wirkende Windgeschwindigkeit gemessen.

Die Windgeschwindigkeit kann als Messgröße herangezogen werden, um Rückschlüsse auf die regional eingespeiste Leistung der Windkraftanlage zu ziehen und die von der Ladesäule bereitgestellte elektrische Leistung an diese Erzeugungsleistung anzupassen.

Neben der parametergesteuerten Laststeuerung erfolgt eine zeitabhängige Steuerung des Ladestroms.

Mit der zeitabhängigen Steuerung können neben der Parametersteuerung bestimmte Zeitabschnitte berücksichtigt werden, in denen eine vorhersagbare Erzeugungsleistung zu erwarten ist.

Im Hinblick auf die einfallende Lichtstrahlung kann auf diese Weise der Unterschied zwischen Tag und Nacht miteinbezogen werden, etwa bei der Unterscheidung, ob es sich um Sonnenlicht oder um künstliches Licht der Straßenbeleuchtung handelt, oder es können ausgehend von Wetterprognosen zu erwartende Sonnenschein- oder Starkwindperioden bei der Laststeuerung berücksichtigt werden.

Weiterhin wird der am Ort der Ladestation gemessene physikalisch-meteorologischer Parameter mittels einer Kommunikationseinrichtung übertragen.

Die Datenübertragung des physikalisch-meteorologischer Parameters ermöglicht eine Fernabfrage des aktuell gemessenen Parameterwertes. Die von den Ladestationen gesendeten und von einer Betriebsstelle empfangenen Parameterwerte können zur Weiterverarbeitung ausgewertet werden, um beispielsweise im Hinblick auf eine übergeordnete Laststeuerung für alle an die Anlage zur Erzeugung regenerativer Energie angeschlossenen Ladestationen ein genaues Bild über die regionale Helligkeitsverteilung zu erhalten und die Lastverteilung übergeordnet zu steuern.

Die erfassten Parameterwerte können weiterhin dazu verwendet werden, um Wetterdaten zu verfeinern oder um die Straßenbeleuchtung zu überwachen und zu schalten.

Bezogen auf eine Vorrichtung wird die Aufgabe in Verbindung mit den Merkmalen des Oberbegriffs des Anspruchs 7 dadurch gelöst, dass die Ladestation eine Messvorrichtung zur Bestimmung des physikalisch-meteorologischen Parameters aufweist sowie eine Steuereinrichtung, welche die von der Ladestation bereitgestellte elektrische Leistung durch Änderung eines Ladestroms in Abhängigkeit des gemessenen physikalisch-meteorologischen Parameters steuert.

In Umsetzung des erfindungsgemäßen Verfahrens nach Anspruch 1 umfasst die Ladestation eine Messvorrichtung zur Bestimmung des physikalisch-meteorologischen Parameters.

Mit der Messvorrichtung wird der physikalisch-meteorologischen Parameter erfasst und in ein elektrisches Steuersignal umgewandelt. Ein Messaufnehmer der Messvorrichtung ist dabei so angeordnet, dass die Messbedingungen am Ort der Ladestation den Bedingungen am Ort der Anlage zur Erzeugung regenerativer Energie weitgehend entsprechen.

Die Steuereinrichtung stellt den Ladestrom in Abhängigkeit des gemessenen physikalisch-meteorologischen Parameters so ein, dass keine Lastspitzen auftreten und sich ein möglichst ausgeglichenes Lastprofil einstellt.

Die Messvorrichtung ist in dem Fall, dass die Anlage zur Erzeugung regenerativer Energie eine Fotovoltaikanlage ist, als Lichtsensor zur Messung der Lichtstrahlung ausgeführt.

Da die Lichtstrahlung als Maßstab für die von der Fotovoltaikanlage erzeugt Leistung herangezogen wird, ist die Messvorrichtung als Lichtsensor ausgeführt.

Im Fall einer Windkraftanlage ist die Messvorrichtung als Windmesser zur Messung der Windgeschwindigkeit ausgeführt.

Weiterhin ist die Steuereinrichtung als zeitabhängige Steuerung ausgeführt.

Die mit einer zeitabhängigen Steuerung erweiterte Steuereinrichtung ermöglicht die Berücksichtigung von Zeitabschnitten mit vorhersagbaren Erzeugungsleistungen.

In weiterer Ausgestaltung umfasst die Ladestation eine Kommunikationseinrichtung zur Übertragung des gemessenen physikalisch-meteorologischen Parameterwertes.

Diese Ausgestaltung ermöglicht die Weiterverarbeitung des gemessenen Parameterwertes, beispielsweise mit dem Ziel einer übergeordneten Laststeuerung der an die Anlage zur Erzeugung regenerativer Energie angeschlossenen Ladestationen oder um die Daten im Rahmen einer Wetterbeobachtung oder zur Schaltung der Straßenbeleuchtung weiter zu verwenden.

Weitere vorteilhafte Ausgestaltungsmerkmale ergeben sich aus der nachfolgenden Beschreibung und den Zeichnungen, die eine bevorzugte Ausführungsform der Erfindung an Hand von Beispielen erläutern. Es zeigen:
- **Fig. 1:**: eine erfindungsgemäße Ladestation bei Sonnenlichteinstrahlung,
- **Fig. 2:**: die erfindungsgemäße Ladestation mit Straßenbeleuchtung und
- **Fig. 3:**: ein funktionales Blockdiagramm der erfindungsgemäßen Ladestation.

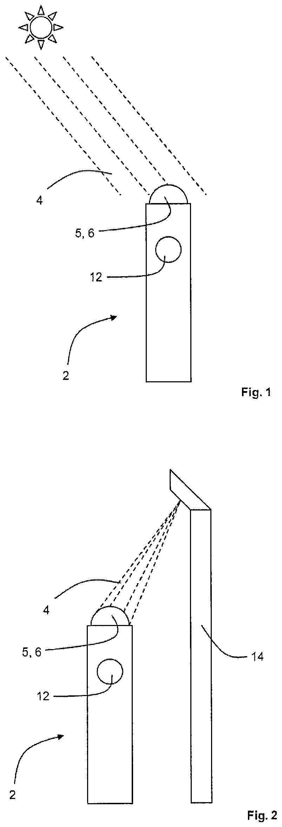

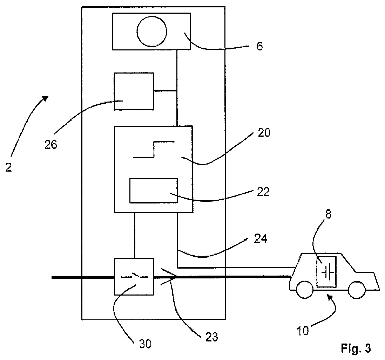

**Fig. 1** zeigt eine erfindungsgemäße Ladestation 2 bei Sonnenlichteinstrahlung. Die einfallende Lichtstrahlung 4 wird als physikalisch-meteorologischer Parameter von einer als Lichtsensor 5 ausgeführten Messvorrichtung 6 aufgenommen. Zum Anschluss eines Elektrofahrzeugs 10 (Fig. 3) mit aufladbarem Energiespeicher 8 (Fig. 3) weist die Ladestation eine Ladedose 12 auf.

In **Fig. 2** ist die erfindungsgemäße Ladestation 2 im Umfeld einer Straßenbeleuchtung 14 gezeigt. Die von der Straßenbeleuchtung 14 ausgesendete Lichtstrahlung 4 wird von dem Lichtsensor 6 empfangen und kann zur Beurteilung der Funktionsfähigkeit der Straßenbeleuchtung 14 ausgewertet werden.

Die **Fig. 3** zeigt ein funktionales Blockdiagramm der erfindungsgemäßen Ladestation 2. Neben der Messvorrichtung 6, die entsprechend des zu messenden physikalisch-meteorologischen Parameters beispielsweise als Lichtsensor 5 (Fig. 1, 2) oder als Windmesser ausgeführt ist, weist die Ladestation 2 einen Laderegler 20 auf, der eine Steuereinrichtung 22 umfasst. Die Steuereinrichtung 22 steuert die von der Ladestation 2 bereitgestellte elektrische Leistung durch Änderung eines Ladestroms 23, beispielsweise in Abhängigkeit der gemessenen Lichtstrahlung 4 (Fig. 1, 2). Dabei werden über eine Steuerleitung 24 (Control Pilot) Steuersignale zwischen der Ladestation 2 und dem Elektrofahrzeug 10 ausgetauscht.

Weiterhin weist die Ladestation 2 eine Kommunikationseinrichtung 26 auf, mit der der Wert des physikalisch-meteorologischen Parameters zur externen Weitererarbeitung, beispielsweise in einer zentralen Betriebsstelle, übermittelt werden kann.

Ein Lastrelais 30 trennt das versorgende Ladenetz von der Ladestation 2.

## Patentansprüche

1. Verfahren zur Steuerung einer an einer Ladestation (2) für ein Elektrofahrzeug (10) bereitgestellten elektrischen Leistung, wobei die Ladestation (2) von einer Anlage zur Erzeugung regenerativer Energie gespeist wird, die derart nahe an der Ladestation (2) installiert ist, dass ein am Ort der Anlage wirkender und die erzeugte Leistung der Anlage bestimmender physikalisch-meteorologischer Parameterwert näherungsweise gleich dem Wert des Parameters am Ort der Ladestation (2) ist, umfassend die Verfahrensschritte:
- Messen des physikalisch-meteorologischer Parameters am Ort der Ladestation (2),
- Steuern der von der Ladestation (2) bereitgestellten elektrischen Leistung durch Änderung eines Ladestroms (23) in Abhängigkeit des gemessenen physikalisch-meteorologischen Parameters.

2. Verfahren nach Anspruch 1,
**dadurch gekennzeichnet,**
**dass** die Anlage zur Erzeugung regenerativer Energie eine Fotovoltaikanlage ist und als physikalisch-meteorologischer Parameter eine am Ort der Ladestation (2) einfallende Lichtstrahlung (4) gemessen wird.

3. Verfahren nach Anspruch 2,
**dadurch gekennzeichnet,**
**dass** die Messung der einfallenden Lichtstrahlung (4) zur Beurteilung der Funktionsfähigkeit einer in unmittelbarer Nähe der Ladestation befindlichen Straßenbeleuchtung herangezogen wird.

4. Verfahren nach Anspruch 1,
**dadurch gekennzeichnet,**
**dass** die Anlage zur Erzeugung regenerativer Energie eine Windkraftanlage ist und als physikalisch-meteorologischer Parameter eine am Ort der Ladestation (2) wirkende Windgeschwindigkeit gemessen wird.

5. Verfahren nach einem der Ansprüche 1 bis 4,
**dadurch gekennzeichnet,**
**dass** der Ladestrom (23) zeitabhängig gesteuert wird.

6. Verfahren nach einem der Ansprüche 1 bis 5,
**dadurch gekennzeichnet,**
**dass** der am Ort der Ladestation (2) gemessene physikalisch-meteorologischer Parameter mittels einer Kommunikationseinrichtung (26) übertragen wird.

7. Ladestation (2) für ein Elektrofahrzeug (10), die von einer Anlage zur Erzeugung regenerativer Energie gespeist wird, die derart nahe an der Ladestation installiert ist, dass ein am Ort der Anlage wirkender und die erzeugte Leistung der Anlage bestimmender physikalisch-meteorologischer Parameterwert näherungsweise gleich dem Wert des Parameters am Ort der Ladestation (2) ist,
**gekennzeichnet durch**
eine Messvorrichtung (6) zur Bestimmung des physikalisch-meteorologischen Parameters und eine Steuereinrichtung (22), welche die von der Ladestation (2) bereitgestellte elektrische Leistung **durch** Änderung eines Ladestroms (23) in Abhängigkeit des gemessenen physikalisch-meteorologischen Parameters steuert.

8. Ladestation nach Anspruch 7,
**dadurch gekennzeichnet,**
**dass** die Anlage zur Erzeugung regenerativer Energie eine Fotovoltaikanlage ist und die Messvorrichtung (6) als Lichtsensor (5) zur Messung der Lichtstrahlung (4) ausgeführt ist.

9. Ladestation nach Anspruch 7,
**dadurch gekennzeichnet,**
**dass** die Anlage zur Erzeugung regenerativer Energie eine Windkraftanlage ist und die Messvorrichtung (6) als Windmesser zur Messung der Windgeschwindigkeit ausgeführt ist.

10. Ladestation einem der Ansprüche 7 bis 9,
**dadurch gekennzeichnet,**
**dass** die Steuereinrichtung (22) als zeitabhängige Steuerung ausgeführt ist.

11. Ladestation einem der Ansprüche 7 bis 10,
**gekennzeichnet durch**
eine Kommunikationseinrichtung (26) zur Übertragung des gemessenen physikalisch-meteorologischen Parameterwertes.
